# EUROPÄISCHE PATENTSCHRIFT

(11) **EP 1 360 424 B1**
(45) Veröffentlichungstag und Bekanntmachung des Hinweises auf die Patenterteilung: **15.09.2004**
(21) Anmeldenummer: 01985928.9
(22) Anmeldetag: 22.12.2001
(51) Int. Cl.: F16D 3/38

(54) **FLANSCHMITNEHMER FÜR KREUZGELENKE**
FLANGE DRIVER FOR UNIVERSAL JOINTS
ENTRAINEUR A BRIDE POUR JOINTS DE CARDAN

(30) Priorität: 17.02.2001 DE 10107605
(43) Veröffentlichungstag der Anmeldung: 12.11.2003
(73) Patentinhaber: Spicer Gelenkwellenbau GmbH & Co. KG, 45013 Essen (DE)
(72) Erfinder: ERLMANN, Nikolaus, Martin, 40213 Düsseldorf (DE)
(74) Vertreter: Müller, Thomas Michael, Dipl.-Ing.
(86) Internationale Anmeldenummer: PCT/EP2001/015296
(87) Internationale Veröffentlichungsnummer: WO 2002/066847

(56) Entgegenhaltungen:
- DE-C- 624 185
- FR-A- 2 165 014
- GB-A- 511 475
- US-A- 1 999 487
- US-A- 2 698 527
- PATENT ABSTRACTS OF JAPAN vol. 1999, no. 05, 31. Mai 1999 (1999-05-31) & JP 11 051073 A (KOYO SEIKO CO LTD;KOBE STEEL LTD), 23. Februar 1999 (1999-02-23)

## Beschreibung

Die Erfindung betrifft einen Flanschmitnehmer für Kreuzgelenke, insbesondere zur Übertragung von hohen Drehmomenten.

Die DE 26 36 752 A1 offenbart ein Kreuzgelenk mit zwei Gelenkgabeln, die über ein Zapfenkreuz miteinander verbunden sind. Das Zapfenkreuz umfasst vier Zapfen, die paarweise auf einer gemeinsamen Achse liegen, wobei sich die Achsen zweier Paare rechtwinklig schneiden. Die Gelenkgabeln umfassen jeweils zwei Lagerelemente, in denen jeweils eine Lagerbohrung zur Aufnahme eines Zapfens des Zapfenkreuzes vorgesehen ist. Die Lagerelemente einer Gelenkgabel sind mittels Befestigungsschrauben mit einem Gegenflansch verbunden. Die Lagerelemente weisen hierzu jeweils zwei parallel zu einer Längsachse der Gelenkgabel verlaufende Durchgangsbohrungen auf. Im Gegenflansch sind Gewindebohrungen vorgesehen, in denen die durch die Durchgangsbohrungen geführten Befestigungsschrauben einsitzen. Die Querschnittsfläche der Lagerelemente in der Ebene, die durch das Zapfenkreuz aufgespannt ist, ist aufgrund der Durchgangsbohrungen im Vergleich zu einer ungeteilten Gelenkgabel vermindert. Dies führt dazu, dass das maximale übertragbare Drehmoment geringer ausfällt. Um die gleiche Drehmomentübertragungsfähigkeit wie bei ungeteilten Gelenkgabeln zu erzielen, müssten die Lagerelemente größer ausgeführt werden, wodurch der Rotationsdurchmesser des Kreuzgelenkes vergrößert wäre.

Ein Flanschmitnehmer nach dem Oberbegriff der Anspruchs 1 ist aus JP-A-11 51073 bekannt.

Aufgabe der vorliegenden Erfindung ist es, einen Flanschmitnehmer für Kreuzgelenke vorzuschlagen, der bei geteilten Flanschmitnehmern eine möglichst hohe Drehmomentübertragung ermöglicht.

Die Aufgabe wird erfindungsgemäß durch einen Flanschmitnehmer für Kreuzgelenke, insbesondere für Kreuzgelenke zur Übertragung hoher Drehmomente,
mit einem Flanschelement, welches
- eine Längsachse,
- zwei erste Befestigungsflächen,
- die an einer ersten Stirnseite des Flanschelements auf einem gemeinsamen Umfang um die Längsachse 180° zueinander versetzt angeordnet sind,
- eine Verbindungsfläche,
   die an einer zweiten Stirnseite des Flanschelements angeordnet ist,
   mit der dàs Flanschelement mit einem Gegenflansch verbindbar ist,
   aufweist und
   mit zwei Lagerelementen, welche jeweils
- eine Lagerbohrung, wobei die Lagerbohrungen der beiden Lagerelemente koaxial zu einer gemeinsamen Bohrungsachse angeordnet sind und wobei die Bohrungsachse die Längsachse rechtwinklig schneidet,
- eine zweite Befestigungsfläche, die mit einer der ersten Befestigungsflächen der Flanschelements in Anlage ist, und
- zumindest zwei parallel zur Längsachse verlaufende Sacklochbohrungen mit Innengewinde, die von der zweiten Befestigungsfläche ausgehen,
   aufweisen,
   wobei jeder Sacklochbohrung eine parallel zur Längsachse verlaufende Durchgangsbohrungen in dem Flanschelement zugeordnet ist,
   wobei die Durchgangsbohrungen jeweils ausgehend von einer ersten Spannfläche in eine der ersten Befestigungsflächen münden und wobei Befestigungsschrauben durch die Durchgangsbohrungen hindurch gesteckt sind, sich jeweils über eine Schraubenmutter oder einen Schraubenkopf gegen die jeweilige erste Spannfläche abstützt und in den Sacklochbohrungen einsitzen, gelöst.

Somit wird erzielt, dass der Querschnitt der Lagerelemente in der Ebene, die durch ein Zapfenkreuz eines Kreuzgelenkes aufgespannt wird, nicht zusätzlich durch Bohrungen für Befestigungsschrauben geschwächt ist. Zudem sind keine Auflagefläche für Schraubenköpfe an dem Ende der Lagerelemente, das dem Flanschelemente entfernt angeordnet ist, vorzusehen. Somit können die Lagerelemente zu diesem Ende hin sich verjüngend ausgestaltet sein. Das heißt, die Flanken der Lagerelemente, die von der zweiten Befestigungsfläche zu dem dem Flanschelement abgewandten Ende des Lagerelementes führen und seitlich von der Lagerbohrung angeordnet sind, können einen größeren Winkel zu einer Achse parallel zur Längsachse einnehmen. Hierdurch wird erzielt, dass die Befestigungsfläche größer ausgebildet werden kann. Zudem wird vermieden, dass Schraubenköpfe an dem dem Flanschelement abgewandten Ende der Lagerelemente mit Bauteilen des anderen Flanschmitnehmers bei großen Beugewinkeln kollidieren.

Um die Schraubenenden der Befestigungsschrauben in den ersten Spannflächen versenkt aufnehmen zu können, ist vorgesehen, dass die Durchgangsbohrungen jeweils ausgehend von der ersten Spannfläche in eine Bohrung größeren Durchmessers übergehen, die in der Verbindungsfläche endet. Da in diesem Fall die Befestigungsschrauben ausgehend von der Verbindungsfläche durch die Durchgangsbohrungen im Flanschelement durchgesteckt werden, ist eine leichte Zugänglichkeit der Befestigungsschrauben gewährleistet.

Es kann auch vorgesehen sein, dass das Flanschelement eine Außenumfangsfläche aufweist, in der Ausnehmungen vorgesehen sind, die die ersten Spannflächen bilden. Ebenso kann vorgesehen sein, dass das Flanschelement eine Außenumfangsfläche aufweist, in der eine Umfangsnut vorgesehen ist, die die ersten Spannflächen bildet. Bei diesen Ausführungsformen werden die Befestigungsschrauben zunächst in die Sacklochbohrungen der Lagerelemente eingeschraubt und daraufhin ausgehend von den Befestigungsflächen des Flanschelements durch die Durchgangsbohrungen hindurch gesteckt und auf der Seite der Spannflächen jeweils mit einer Mutter gesichert. Die Spannflächen und die Verbindungsfläche sind somit in Richtung der Längsachse axial beabstandet. Dies ist insbesondere dann erforderlich, wenn lange Sockelabmessungen, dass heißt ein großer Abstand zwischen Verbindungsfläche und Befestigungsflächen, erforderlich sind.

Um sicherzustellen, dass die Befestigungsschrauben nicht mit Scherkräften beaufschlagt werden, ist vorgesehen, dass die ersten Befestigungsflächen sowie die zweiten Befestigungsflächen Mittel zum Übertragen von Kräften in einer Ebene senkrecht zur Längsachse aufweisen. Ferner können die Mittel zum Zentrieren der Lagerelemente vorgesehen sein. Die Mittel zum Übertragen von Kräften und zum Zentrieren können dadurch gebildet sein, dass die ersten Befestigungsflächen des Flanschelementes jeweils eine radial zur Längsachse verlaufende Nut aufweisen und dass die zweiten Befestigungsflächen der Lagerelemente jeweils eine Gegengleichausformung aufweisen. Alternativ kann vorgesehen sein, dass die ersten Befestigungsflächen des Flanschelementes Verzahnungen aufweisen und dass die zweiten Befestigungsflächen der Lagerelemente zu den ersten Verzahnungen komplementäre Verzahnungen aufweisen. Hierbei kann vorgesehen sein, dass die Zähne der Verzahnungen jeweils eine erste Flanke aufweisen, die in einem steilen Winkel zu einer senkrecht zur Längsachse angeordneten Ebene verlaufen, und jeweils eine zweite Flanke aufweisen, die in einem flachen Winkel zur Ebene verläuft. Durch die steil verlaufende erste Flanke werden Querkräfte in einer Richtung senkrecht zur Längsachse gut aufgenommen. Durch die zweite flach verlaufende Flanke wird hingegen gewährleistet, dass die Spannkräfte der Befestigungsschrauben sowie Lagerkräfte in Richtung der Längsachse aufgenommen werden können.

Die Zähne der Verzahnungen können parallel zur Bohrungsachse verlaufen. Hierdurch können Drehmomente mit den Verzahnungen übertragen werden. Andere Winkel zwischen 0° und 180° zur Bohrungsachse können jedoch auch vorgesehen werden. Um eine definierte Position der Lagerelemente in radialer Richtung zur Längsachse zu gewährleisten und ein Verdrehen der Lagerelemente zu vermeiden, kann vorgesehen sein, dass die ersten Befestigungsflächen Vorsprünge aufweisen, gegen die sich die Lagerelemente in radialer Richtung abstützen. Ebenso kann vorgesehen sein, dass in den ersten Befestigungsflächen und in den zweiten Befestigungsflächen Feder-Nut-Verbindungen vorgesehen sind.

Die Zähne der Verzahnungen können auch radial zu einem Mittelpunkt verlaufen, der in der Ebene liegt, die von der Längsachse und der Bohrungsachse aufgespannt ist. Hierdurch wird zum einen erreicht, dass Kräfte über die Verzahnungen übertragen werden können. Zum anderen ist eine definierte Position des Lagerelementes und damit der Bohrungsachse vorgegeben.

Die Zähne der Verzahnungen können auch in zwei Bereichen jeweils parallel zueinander verlaufen, wobei sich die Zähne des einen Bereichs und die Zähne des anderen Bereichs in ihrer Verlängerung in einem Winkel schneiden.

Vorzugsweise weist die Verbindungsfläche Zentriermittel zum Zentrieren des Flanschelementes gegenüber einer Längsachse des Gegenflansches auf. Diese Zentriermittel können durch ein Hirth-Stirnverzahnung dargestellt sein.

Das Flanschelement kann mittels Verbindungsschrauben mit dem Gegenflansch verbindbar sein, wobei in dem Flanschelement Durchgangsbohrungen vorgesehen sind, durch die die Verbindungsschrauben hindurch steckbar sind.

Die Durchgangsbohrungen für die Verbindungsschrauben münden vorzugsweise jeweils ausgehend von der Verbindungsfläche in eine erste Spannfläche, die zur Anlage einer Mutter oder eines Schraubenkopfes dient. Vorzugsweise ist hierbei vorzusehen, dass das Flanschelement eine Außenumfangsfläche aufweist, in der zwei zueinander um 180° versetzt angeordnete Taschen gebildet sind, die jeweils im Bereich zwischen zwei Durchgangsbohrungen für Befestigungsschrauben eines Lagerelementes angeordnet sind und die jeweils eine zweite Spannfläche bilden.

Das Flanschelement kann zudem zwei Ausnehmungen ausweisen, die sich jeweils über den Umfang zwischen zwei Befestigungsflächen erstrecken und die ebenfalls jeweils eine zweite Spannfläche bilden.

Grundsätzlich ist es auch möglich, dass das Flanschelement mit einem Gegenflansch verschweißt wird.

Vorzugsweise ist das Flanschelement nitriergehärtet und das Lagerelement einsatzgehärtet.

Bevorzugte Ausführungsbeispiele werden anhand der Zeichnungen näher erläutert.

Es zeigt
- Figur 1: ein Kreuzgelenk mit zwei erfindungsgemäßen Flanschmitnehmern in einer perspektivischen Darstellung,
- Figur 2: einen erfindungsgemäßen Flanschmitnehmer in einer perspektivischen Darstellung,
- Figur 3: ein Flanschelement eines Flanschmitnehmers gemäß Figur 2,
- Figur 4: ein Lagerelement eines Flanschmitnehmers gemäß Figure 2,
- Figur 5: einen erfindungsgemäßen Flanschmitnehmer mit einem Gegenflansch sowie mit Befestigungsschrauben und Verbindungsschrauben in einer Explosionsdarstellung,
- Figur 6: ein Flanschelement und ein Lagerelement, die mittels Befestigungsschrauben miteinander verbunden sind, in einem Längsschnitt parallel zur Längsachse,
- Figuren 7 bis 16: Lagerelemente mit verschiedenen Verzahnungen an der Befestigungsfläche.
- Figur 17: einen Flanschmitnehmer mit einem Flanschelement in dessen Außenumfangsfläche Taschen vorgesehen sind, die die Spannflächen bilden,
- Figur 18: einen Flanschmitnehmer mit einem Flanschelement in dessen Außenumfangsfläche eine Umfangsnut vorgesehen ist, die die Spannflächen bildet.

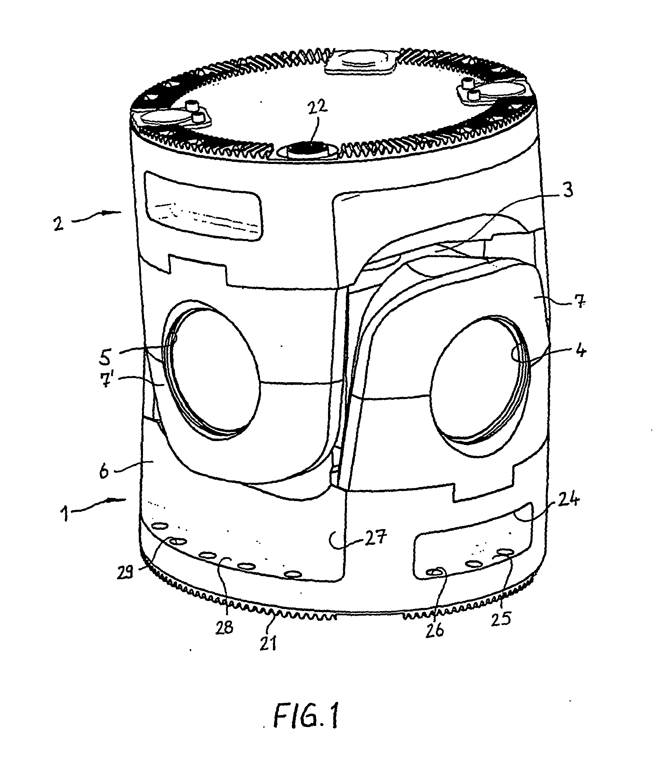

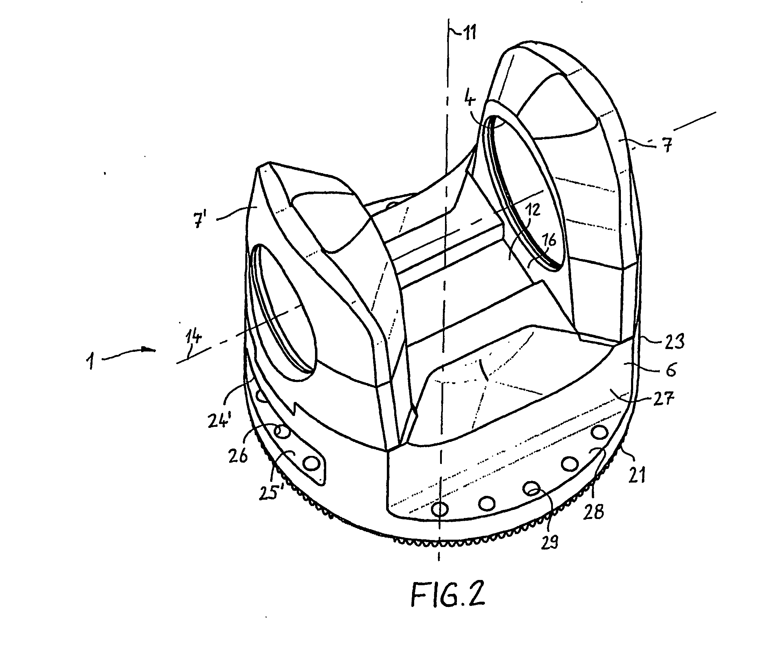

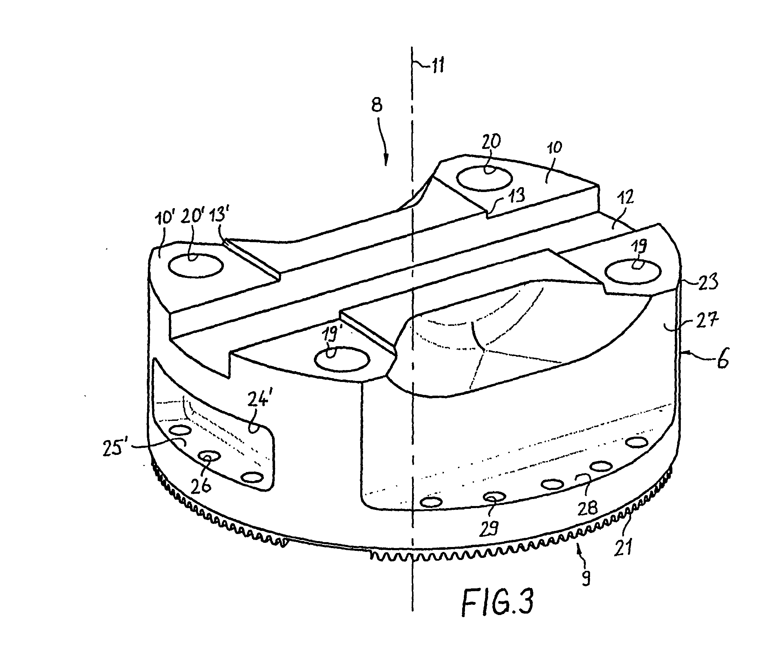

Figur 1 zeigt ein Kreuzgelenk mit einem ersten Flanschmitnehmer 1, einem zweiten Flanschmitnehmer 2 und einem Zapfenkreuz 3. Das Zapfenkreuz weist vier Zapfen auf, die paarweise auf einer gemeinsamen Zapfenachse angeordnet sind und in Lagerbohrungen 4, 5 der Flanschmitnehmer 1, 2 gelagert sind. Die Flanschmitnehmer 1, 2 sind identisch ausgeführt, wobei der Aufbau der Flanschmitnehmer 1, 2 anhand des ersten Flanschmitnehmers 1 der in den Figuren 2, 3 und 4 dargestellt ist, erläutert werden.

Der erste Flanschmitnehmer 1 umfaßt ein Flanschelement 6 sowie zwei Lagerelemente 7, 7', die mittels Befestigungsschrauben lösbar mit dem Flanschelement 6 verbunden sind. Das Flanschelement 6 weist eine erste Stirnseite 8 und eine zweite Stirnseite 9 auf. An der ersten Stirnseite 8 sind zwei erste Befestigungsflächen 10, 10' auf einem gemeinsamen Umfang um eine Längsachse 11 des Flanschelementes 6 um 180° zueinander versetzt angeordnet. In der ersten Stirnseite 8 ist ferner eine radial verlaufende Nut 12 vorgesehen, die die Längsachse 11 schneidet und durch die ersten Befestigungsflächen 10, 10' verläuft. Die ersten Befestigungsflächen 10, 10' gehen in Vorsprünge 13, 13' über, die jeweils an der nach innen zur Längsachse 11 gerichteten Seite der jeweiligen ersten Befestigungsflächen 10, 10' angeordnet sind und die in axialer Richtung von der ersten Stirnseite 8 vorstehen.

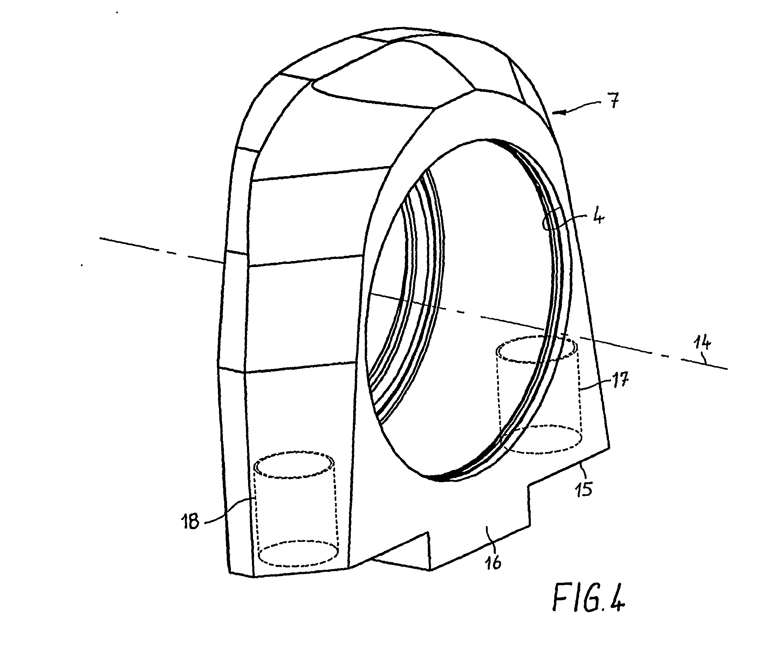

Die Lagerelemente 7, 7' sind identisch ausgeführt. Figur 4 zeigt das Lagerelement 7, welches eine Lagerbohrung 4 aufweist, in der ein Zapfen eines Zapfenkreuzes lagernd aufgenommen werden kann. Die Lagerbohrung 4 weist eine Bohrungsachse 14 auf, die die Längsachse 11 in einem rechten Winkel schneidet. Das Lagerelement 7 weist eine zweite Befestigungsfläche 15 auf, an der eine zur Nut 12 des Flanschelementes 6 gegen gleiche Ausformungen 16 angeordnet ist. Ausgehend von der zweiten Befestigungsfläche 15 sind zwei Sacklockbohrungen 17, 18 vorgesehen, die ein Innengewinde aufweisen und parallel zur Längsachse 11 verlaufen. Im montierten Zustand des Lagerelementes 7 sind die Sacklochbohrungen 17, 18 jeweils koaxial zu einer Durchgangsbohrung 19, 20, 19', 20' angeordnet, wobei die Durchgangsbohrungen 19, 20, 19', 20' von den ersten Befestigungsflächen 10, 10' ausgehen und ebenfalls parallel zur Längsachse 11 angeordnet sind.

An der zweiten Stirnfläche 9 ist eine Verbindungsfläche 21 vorgesehen, mit der das Flanschelement 6 mittels Befestigungsschrauben 22 lösbar verbindbar ist. Die Verbindungsfläche 21 ist mit einer Hirth-Stirnverzahnung versehen, wodurch sich das Flanschelement 6 relativ zu einer Längsachse eines Gegenflansches zentrieren lässt. Zudem kann durch die Hirth-Stirnverzahnung Drehmoment übertragen werden, ohne dass die Befestigungsschrauben 22 durch Scherkräfte beansprucht werden.

Das Flanschelement 6 weist eine Außenumfangsfläche 23 auf, in der zwei zueinander um 180° versetzte Taschen 24, 24' angeordnet sind. Die Taschen 24, 24' sind jeweils in einem Bereich zwischen zwei Durchgangsbohrungen 19, 20, 19', 20' für die Befestigungsschrauben 22 eines Lagerelementes 7, 7' angeordnet. Die Taschen 24, 24' bilden jeweils eine erste Spannfläche 25, 25', die als Auflagefläche für Muttern oder Schraubenköpfe dienen. In die Spannflächen 25, 25' münden Durchgangsbohrungen 26, die parallel zur Längsachse 11 verlaufen. Die Durchgangsbohrungen 26 dienen zum Befestigen des Flanschelementes 6 mit einem Gegenflansch mittels Verbindungsschrauben.

Das Flanschelement 6 weist zudem zwei Ausnehmungen 27, 27' auf, die sich jeweils über den Umfang zwischen zwei ersten Befestigungsflächen 10, 10' erstrecken und die jeweils eine zweite Spannfläche 28, 28' bilden. Die Spannflächen 28, 28' dienen ebenfalls als Auflage für Muttern oder Schraubköpfe, die durch Durchgangsbohrungen 29 durchgeführt werden können. Die Durchgangsbohrungen 29 gehen von den Spannflächen 28, 28' aus und verlaufen parallel zur Längsachse 11.

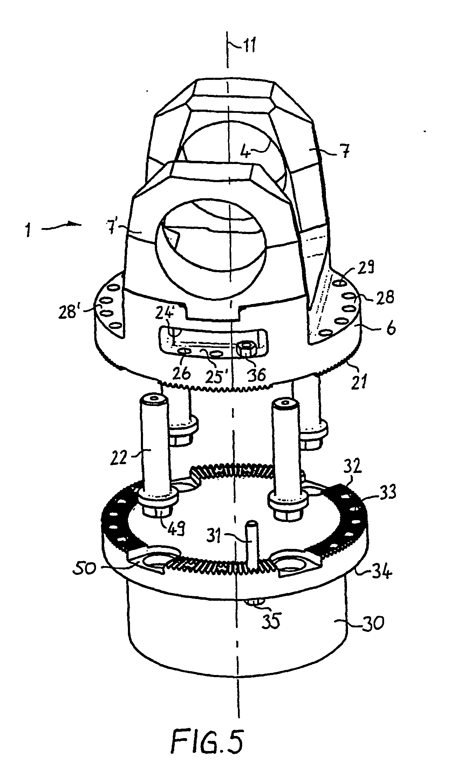

Figur 5 zeigt den ersten Flanschmitnehmer 1 gemäß der Figuren 1 bis 4 und ist dort beschrieben. Zudem ist ein Gegenflansch 30 gezeigt, der mit dem ersten Flanschmitnehmer 1 über Verbindungsschrauben 31 verbindbar ist. Der Gegenflansch 30 weist eine zur Verbindungsfläche 21 des Flanschelementes 6 komplementär ausgebildete Verbindungsfläche 32 auf. Ausgehend von der Verbindungsfläche 32 verlaufen Durchgangsbohrungen 33 parallel zur Längsachse 11. Eine Verbindungsschraube 31 ist in Figur 5 repräsentativ für die übrigen Verbindungsschrauben dargestellt. Sie ist durch eine der Durchgangsbohrungen 33 ausgehend von einer Fläche 34 hindurchgesteckt, wobei ein Schraubenkopf 35 der Verbindungsschraube 31 an der Fläche 34 anliegt. Die Verbindungsschraube 31 läßt sich zudem durch eine der Durchgangsbohrungen 26 des Flanschelementes 6 hindurchstecken. Mittels einer Mutter 36, die sich gegen die Spannfläche 25' der Tasche 24' abstützt, wird die Verbindungsschraube 31 gesichert.

Alternativ ist es auch möglich, im Flanschelement Sattlochbohrungen mit Innengewinde vorzusehen, in die Verbindungsschrauben in Form von Stiftschrauben eingeschraubt werden. Die Stiftschrauben werden sodann durch die Durchgangsbohrungen im Gegenflansch hindurch gesteckt und mittels Schraubenmuttern gesichert.

Die Befestigungsschrauben 22 lassen sich ausgehend von der Verbindungsfläche 21 durch die Durchgangsbohrungen 19, 20, 19', 20' des Flanschelementes 6 hindurchstecken und in die jeweiligen Sacklochbohrungen der Lagerelemente 7, 7' einschrauben. Schraubenköpfe 49 der Befestigungsschrauben 22 tauchen im montierten Zustand des Gegenflansches 30 in Ausnehmungen 50 in der Verbindungsfläche 32 ein.

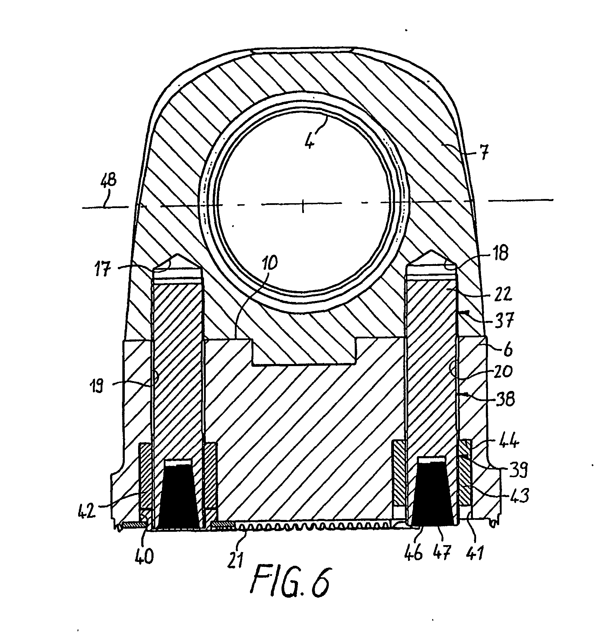

Figur 6 zeigt die Befestigung des Lagerelementes 7 mit dem Flanschelement 6. Das Lagerelement 7 und das Flanschelement 6 sind hierbei in einer Ebene geschnitten dargestellt, die parallel zur Längsachse und durch die Befestigungsschrauben 22 verläuft. Die Befestigungsschrauben 22 weisen jeweils einen ersten Gewindeabschnitt 37 auf, mit dem die Befestigungsschrauben 22 in die Sacklochbohrungen 17, 18 des Lagerelementes 7 eingeschraubt sind. An den ersten Gewindeabschnitt 37 schließt sich ein Dehnabschnitt 38, der kein Gewinde aufweist, an. An den Dehnabschnitt 38 schließt sich wiederum ein zweiter Gewindeabschnitt 39 an, der innerhalb der Durchgangsbohrungen 19, 20 angeordnet ist. Die Durchgangsbohrungen 19, 20 gehen ausgehend von der ersten Befestigungsfläche 10 in einen Bohrungsbereich 40, 41 größeren Durchmessers über. Innerhalb dieser Bohrungsbereiche ist jeweils eine Mutter 42, 43 angeordnet, die auf den zweiten Gewindeabschnitt 39 einer der Befestigungsschraube 22 aufgeschraubt ist und sich gegen eine Schulter 44, 45 im Übergang zum Bohrungsbereich 40, 41 mit erweitertem Durchmesser abstützt. Ferner weisen die Befestigungsschrauben 22 ausgehend von den dem Lagerelement 7 abgewandten Stirnflächen 46 in Schraubenachse verlaufende kegelige Innengewinde 47 auf.

Zur Befestigung des Lagerelementes 7 lassen sich zunächst die Schrauben 22 in die Sacklochbohrungen 17, 18 mit Innengewinde einschrauben. Daraufhin können die Befestigungsschrauben 22 mittels eines Gewindebolzens, der in die kegeligen Innengewinde 47 einschraubbar ist, dehnen. Im gedehnten Zustand der Befestigungsschrauben 22 können sodann die Muttern 42, 43 auf die zweiten Gewindeabschnitte 39 aufgeschraubt werden. Nach dem Entfernen der Gewindebolzen aus den kegeligen Innengewinden 47 sind die Befestigungsschrauben 22 somit vorgespannt. Somit lässt sich eine Verschraubung mit einer definierten Vorspannung erzielen, wobei die Befestigungsschrauben 22 nicht durch Torsion beansprucht sind.

Damit die Verbindungsfläche 21 des Flanschelementes 6 plan abschließt, sind die Enden der Befestigungsschrauben 22, die durch die zweiten Gewindeabschnitte 39 gebildet sind, versenkt in die Verbindungsfläche 21 aufgenommen.

In dieser Darstellung ist zudem zu erkennen, dass der Querschnitt des Lagerelementes 7 in einer Ebene, die durch die Zapfenachsen eines Zapfenkreuzes aufgespannt ist, nicht durch die Sacklochbohrungen 17, 18 geschwächt ist. Exemplarisch ist in Figur 6 eine solche Ebene 48 dargestellt für den Fall, dass das Kreuzgelenk nicht abgewinkelt ist.

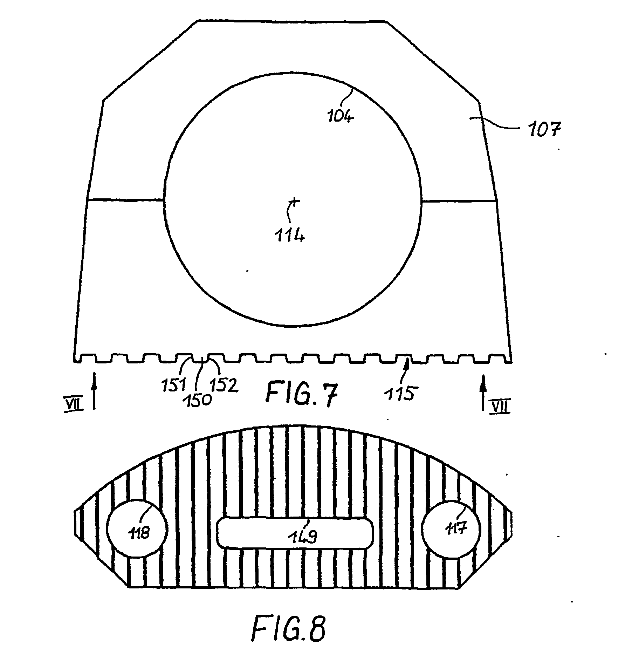

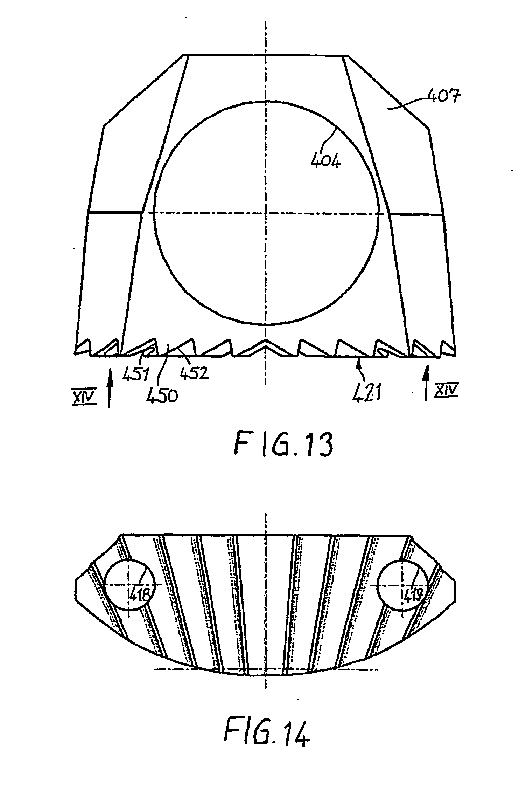

Die Figuren 7 bis 16 zeigen weitere Ausführungsbeispielen von Lagerelementen mit Befestigungsflächen, die eine Verzahnung aufweisen. Bauteile, die mit Bauteilen der Figuren 1 bis 6 übereinstimmen, sind mit Bezugszeichen versehen, die um ein Vielfaches des Werts 100 erhöht sind, und bei den Figuren 1 bis 6 beschrieben.

Das Lagerelement 107 gemäß der Figuren 7 und 8 weist eine Geradverzahnung auf. Um Radialkräfte aufzunehmen, die von dem Lagerelement 107 in radialer Richtung auf die Längsachse zu wirken, ist in der Befestigungsfläche 121 eine Nut 149 für eine Feder-Nut-Verbindung vorgesehen. Die Zähne 150 der Verzahnung weisen steile Flanken 151, 152 auf. Diese sind vorzugsweise derart gestaltet, dass beim erstmaligen Verschrauben eine plastische Verformung auftritt.

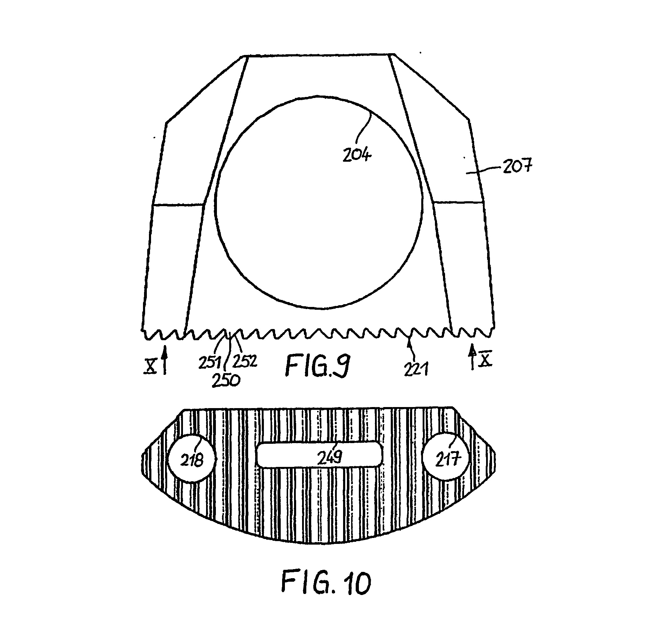

Die Figuren 9 und 10 zeigen ebenfalls ein Lagerelement 207 mit einer Geradverzahnung. In der Befestigungsfläche 221 ist ebenfalls eine Nut 249 für eine Feder-Nut-Verbindung vorgesehen. Die Zähne 250 der Verzahnung weisen Flanken 251, 252 mit unterschiedlichem Winkel auf.

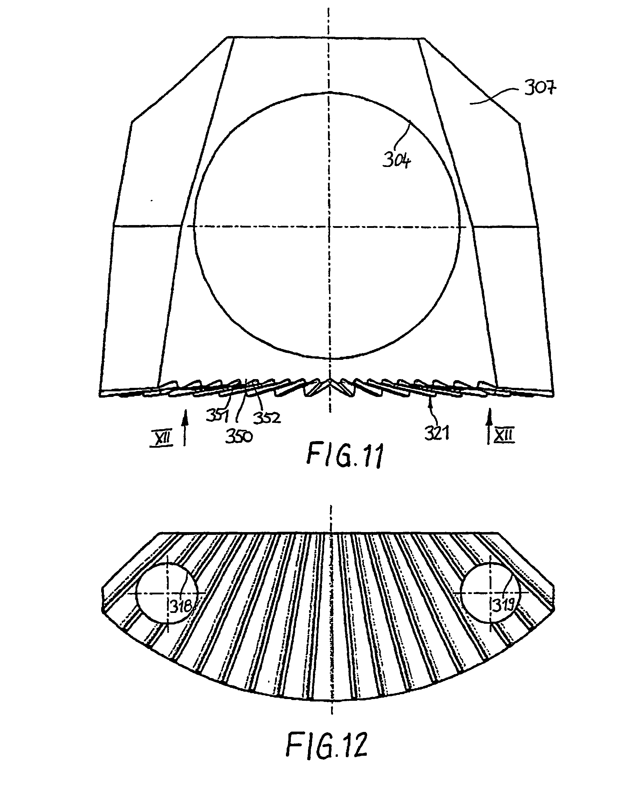

Die Figuren 11, 12, 13 und 14 zeigen jeweils ein Lagerelement 307, 407 mit einer Verzahnung, deren Zähne 350, 450 radial zu einem Mittelpunkt verlaufen, der in der Ebene der Befestigungsfläche 321, 421 liegt. Diese Hirth-Verzahnung hat den Vorteil, dass keine zusätzlichen Mittel zur radialen Ausrichtung bzw. für die Aufnahme von Radialkräften vorgesehen werden müssen. Die Flanken 351, 352 und 451, 452 schließen zudem mit der Ebene der Befestigungsfläche 321, 421, ungleiche Winkel ein.

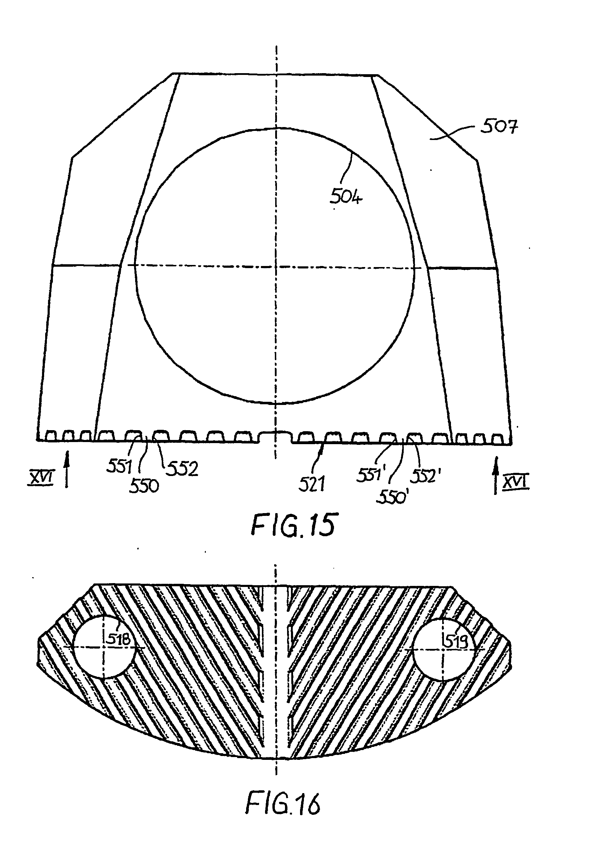

Die Figuren 15 und 16 zeigen eine Lagerelement 507 mit einer Verzahnung, deren Zähne 550, 550' in zwei Bereichen jeweils parallel zueinander verlaufen, wobei sich die Zähne 550 des einen Bereiches und die Zähne 550' des anderen Bereiches in ihrer Verlängerung in einem Winkel schneiden. Hierdurch wird wie bei einer Hirth-Verzahnung ebenfalls vermieden, dass separate Mittel zur Aufnahme von Radialkräften vorgesehen werden müssen.

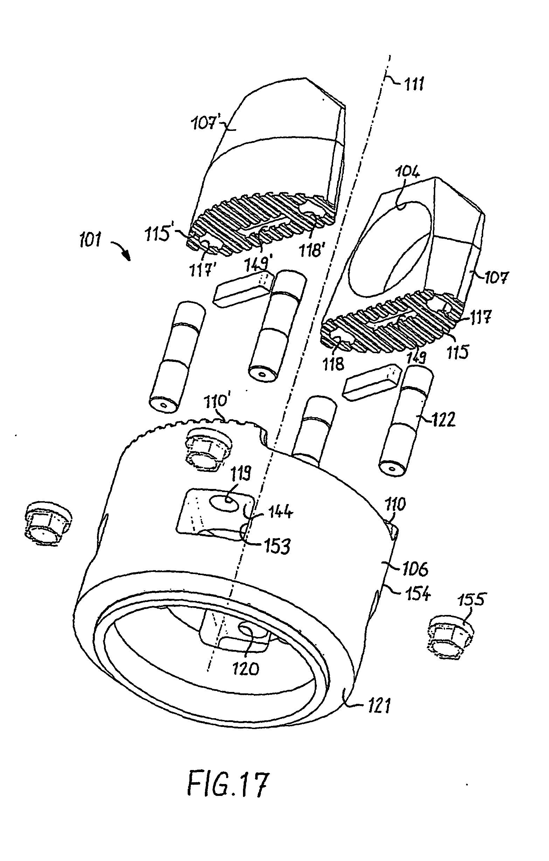

Figur 17 zeigt eine alternative Ausführungsform eines Flanschmitnehmers. Bauteile, die mit Bauteilen des Flanschmitnehmers gemäß der Figuren 1 bis 5 übereinstimmen, sind mit Bezugszeichen versehen, die um den Wert 100 erhöht sind, und sind dort beschrieben.

Der Flanschmitnehmer 101 weist Lagerelemente 107, 107' gemäß der Figuren 7 und 8 auf. Zum befestigen der Lagerelemente 107, 107' werden Befestigungsschrauben 122 in die Sacklochbohrungen mit Innengewinden 117, 117', 118, 118', eingeschraubt. Daraufhin werden die Befestigungsschrauben. 122, welche als Stiftschrauben ausgebildet sind, durch Durchgangsbohrungen 119, 120 des Flanschelements 106 durchgesteckt. Die Durchgangsbohrungen 119, 120 gehen jeweils von einer der ersten Befestigungsflächen 110, 110' aus und münden jeweils in eine erste Spannfläche 144. Die ersten Spannflächen 144 sind jeweils durch eine Ausnehmung 153 gebildet, welche in einer Außenumfangsfläche 154 vorgesehen sind. Auf die Schraubenenden der Befestigungsschrauben 122, welche durch die Durchgangsbohrungen 119, 120 gesteckt sind, werden Schraubenmuttern 155 geschraubt, die sich gegen die ersten Spannflächen 144 abstützen.

Zum Verbinden des Flanschelements 106 mit einem Gegenflansch ist eine Verbindungsfläche 121 vorgesehen, mit der das Flanschelement 106 an einen Gegenflansch geschweißt werden kann.

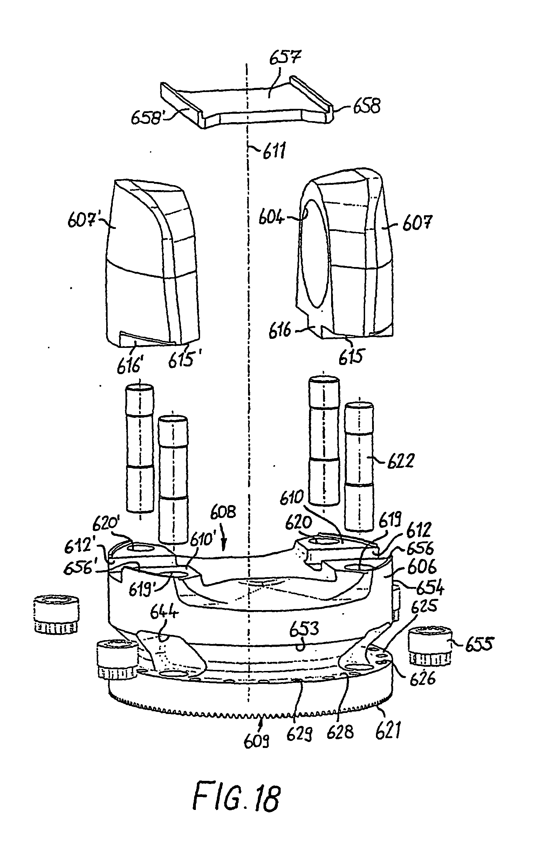

Eine weitere Ausführungsform eines Flanschmitnehmers zeigt Figur 18. Bauteile, die mit Bauteilen des Flanschmitnehmers gemäß der Figuren 1 bis 5 übereinstimmen, sind mit Bezugszeichen versehen, die um den Wert 600 erhöht sind, und sind dort beschrieben.

Die Lagerelemente 607, 607' entsprechen denen des Flanschmitnehmers gemäß der Figuren 1 bis 5, wobei jedoch die Lagerbohrungen 604 nach außen hin geschlossen sind. Die Befestigungsschrauben 622 werden zur Befestigung der Lagerelemente 607, 607' in die Sacklochbohrungen mit Innengewinden der Lagerelemente eingeschraubt. Die Befestigungsschrauben 622 sind als Stiftschrauben ausgeführt und werden durch die Durchgangsbohrungen 619, 619', 620, 620' des Flanschelements 606 gesteckt. Die Durchgangsbohrungen 619, 619', 620, 620' gehen von den ersten Befestigungsflächen 610, 610' aus und münden jeweils in eine erste Spannfläche 644. Auf die Schraubenenden der Befestigungsschrauben 622 werden Schraubenmuttern 655 aufgeschraubt, die sich gegen die ersten Spannflächen 644 abstützen. Die ersten Spannflächen 644 sind durch eine Umfangsnut 653 in eine Außenumfangsfläche 654 des Flanschelements 606 gebildet. Zudem bildet die Umfangsnut 653 die zweiten Spannflächen 625, 628, von denen Durchgangsbohrungen 626, 629 ausgehen, welche in die Verbindungsfläche 621 münden. Durch diese Durchgangsbohrungen 626, 629 lassen sich Verbindungsschrauben zum Verbinden des Flanschelements 606 mit einem Gegenflansch hindurch stecken.

Um ein Verdrehen der Lagerelemente 607, 607' zu vermeiden, weisen die ersten Befestigungsflächen 610, 610' Vorsprünge 656, 656' auf, die in die Außenumfangsfläche 654 übergehen und gegen die sich die Lagerelemente 607, 607' radial abstützen können. Zudem ist eine Druckplatte 657 vorgesehen, die zwischen den beiden Lagerelementen 607, 607' angeordnet ist und sich mit Stirnseiten 658, 658' an den Lagerelementen 607, 607' abstützt.

### Flanschmitnehmer

### Bezugszeichenliste

- 1: erster Flanschmitnehmer
- 2: zweiter Flanschmitnehmer
- 3: Zapfenkreuz
- 4: Lagerbohrung
- 5: Lagerbohrung
- 6: Flanschelement
- 7, 7': Lagerelemente
- 8: erste Stirnseite
- 9: zweite Stirnseite
- 10, 10': erste Befestigungsfläche
- 11: Längsachse
- 12: Nut
- 13, 13': Vorsprung
- 14: Bohrungsachse
- 15: zweite Befestigungsfläche
- 16: Ausformung
- 17: Sacklochbohrung
- 18: Sacklochbohrung
- 19, 19': Durchgangsbohrung
- 20, 20': Durchgangsbohrung
- 21: Verbindungsfläche
- 22: Befestigungsschraube
- 23: Außenumfangsfläche
- 24, 24': Tasche
- 25, 25': zweite Spannfläche
- 26: Durchgangsbohrung
- 27, 27': Ausnehmung
- 28, 28': zweite Spannfläche
- 29: Durchgangsbohrung
- 30: Gegenflansch
- 31: Verbindungsschraube
- 32: Verbindungsfläche
- 33: Durchgangsbohrung
- 34: Fläche
- 35: Schraubenköpfe
- 36: Muttern
- 37: erster Gewindeabschnitt
- 38: Dehnabschnitt
- 39: zweiter Gewindeabschnitt
- 40: Bohrungsbereich
- 41: Bohrungsbereich
- 42: Muttern
- 43: Muttern
- 44: erste Spannfläche
- 45: Schulter
- 46: Stirnfläche
- 47: Innengewinde
- 48: Ebene
- 49: Schraubenkopf
- 50: Ausnehmung
- 101: Flanschmitnehmer
- 104: Lagerbohrung
- 106: Flanschelement
- 107, 107': Lagerelement
- 108: erste Stirnseite
- 109: zweite Stirnseite
- 110, 110': erste Befestigungsfläche
- 111: Längsachse
- 114: Bohrungsachse
- 115: zweite Befestigungsfläche
- 117, 117': Sacklochbohrung
- 118, 118': Sacklochbohrung
- 119, 119': Durchgangsbohrung
- 120, 120': Durchgangsbohrung
- 121: Verbindungsfläche
- 122: Befestigungsschraube
- 144: erste Spannfläche
- 149: Nut
- 150: Zahn
- 151: Flanke
- 152: Flanke
- 153: Ausnehmung
- 154: Außenumfangsfläche
- 155: Schraubenmutter

- 204: Lagerbohrung
- 207: Lagerelement
- 215: Befestigungsfläche
- 217: Sacklochbohrung

- 218: Sacklochbohrung
- 249: Nut
- 250: Zahn
- 251: Flanke
- 252: Flanke

- 304: Lagerbohrung
- 307: Lagerelement
- 315: Befestigungsfläche
- 317: Sacklochbohrung
- 318: Sacklochbohrung
- 349: Nut
- 350: Zahn
- 351: Flanke
- 352: Flanke

- 404: Lagerbohrung
- 407: Lagerelement
- 415: Befestigungsfläche
- 417: Sacklochbohrung
- 418: Sacklochbohrung
- 449: Nut
- 450: Zahn
- 451: Flanke
- 452: Flanke

- 504: Lagerbohrung
- 507: Lagerelement
- 515: Befestigungsfläche
- 517: Sacklochbohrung

- 518: Sacklochbohrung
- 549: Nut
- 550, 550': Zahn
- 551, 551': Flanke
- 552, 552': Flanke

- 604: Lagerbohrung
- 606: Lagerbohrung
- 607, 607': Lagerelement
- 608: erste Stirnseite
- 609: zweite Stirnseite
- 610, 610': erste Befestigungsfläche
- 611: Längsachse
- 612, 612': Nut
- 615, 615': zweite Befestigungsfläche
- 616, 616': Ausformung.
- 619, 619': Durchgangsbohrung
- 620, 620': Durchgangsbohrung
- 621: Verbindungsfläche
- 622: Befestigungsschraube
- 625: zweite Spannfläche
- 626: Durchgangsbohrung
- 628: zweite Spannfläche
- 629: Durchgangsbohrung
- 644: erste Spannfläche
- 653: Umfangsnut
- 654: Außenumfangsfläche
- 655: Schraubenmutter
- 656, 656': Vorsprung
- 657: Druckplatte

- 658, 658': Stirnfläche

## Patentansprüche

1. Flanschmitnehmer für Kreuzgelenke, insbesondere für Kreuzgelenke zur Übertragung hoher Drehmomente,
mit einem Flanschelement (6, 106, 606), welches
- eine Längsachse (11, 111, 611),
- zwei erste Befestigungsflächen (10, 10', 110, 110', 610, 610'),
die an einer ersten Stirnseite (8, 608) des Flanschelements (6, 106, 606) auf einem gemeinsamen Umfang um die Längsachse (11, 111, 611) 180° zueinander versetzt angeordnet sind,
- eine Verbindungsfläche (21, 121, 621),
die an einer zweiten Stirnseite (9, 609) des Flanschelements (6, 106, 606) angeordnet ist,
mit der das Flanschelement (6, 106, 606) mit einem Gegenflansch (30) verbindbar ist,
aufweist und
mit zwei Lagerelementen (7, 7', 107, 107', 607, 607') , welche jeweils
- eine Lagerbohrung (4, 5, 104, 204, 304, 404, 504, 604), wobei die Lagerbohrungen (4, 5, 104, 204, 304, 404, 504, 604) der beiden Lagerelemente (7, 7', 107, 107', 607, 607') koaxial zu einer gemeinsamen Bohrungsachse (14) angeordnet sind und wobei die Bohrungsachse (14) die Längsachse (11, 111, 611) rechtwinklig schneidet,
- eine zweite Befestigungsfläche (15, 115, 115', 615, 615'), die mit einer der ersten Befestigungsflächen (10, 10', 110, 110', 610, 610') der Flanschelements (6, 106, 606) in Anlage ist, aufweisen, **dadurch gekennzeichnet, daß** die zwei Lagerelementen (7,7',107,107',607,607') zumindest zwei parallel zur Längsachse (11, 111, 611) verlaufende Sacklochbohrungen (17, 18, 117, 117', 118, 118', 217, 218, 317, 318, 417, 418, 517, 518) mit Innengewinde aufweisen, die von der zweiten Befestigungsfläche (15, 115, 115', 116, 116') ausgehen,
wobei jeder Sacklochbohrung (17, 18, 117, 117', 118, 118', 217, 218, 317, 318, 417, 418, 517, 518) eine parallel zur Längsachse (11, 111, 611) verlaufende Durchgangsbohrungen (19, 20, 19', 20', 119, 120, 619, 620, 619', 620') in dem Flanschelement (6) zugeordnet ist,
wobei die Durchgangsbohrungen (19, 20, 19', 20', 119, 120, 619, 619', 620, 620') jeweils ausgehend von einer ersten Spannfläche (44, 144, 644) in eine der ersten Befestigungsflächen (10, 10', 110, 110', 610, 610') münden und
wobei Befestigungsschrauben (22, 122, 622) durch die Durchgangsbohrungen (19, 20, 19', 20', 119, 120, 619, 620, 619', 620) hindurch gesteckt sind, sich jeweils über eine Schraubenmutter (155, 655) oder einen Schraubenkopf gegen die jeweilige erste Spannfläche (44, 144, 644) abstützen und in den Sacklochbohrungen (17, 18, 117, 117', 118, 118', 217, 218, 317, 318, 417, 418, 517, 518) einsitzen.

2. Flanschmitnehmer nach Anspruch 1,
**dadurch gekennzeichnet,**
**daß** die Durchgangsbohrungen (19, 20, 19', 20') jeweils ausgehend von der ersten Spannfläche (44) in eine Bohrung (40, 41) größeren Durchmessers übergehen, die in der Verbindungsfläche (21) endet.

3. Flanschmitnehmer nach Anspruch 1,
**dadurch gekennzeichnet,**
**daß** das Flanschelement (106) eine Außenumfangsfläche (154) aufweist, in der Ausnehmungen (153) vorgesehen sind, die die ersten Spannflächen (44) bilden.

4. Flanschmitnehmer nach Anspruch 1,
**dadurch gekennzeichnet,**
**daß** das Flanschelement (606) eine Außenumfangsfläche (654) aufweist, in der eine Umfangsnut (653) vorgesehen ist, die die ersten Spannflächen (644) bildet.

5. Flanschmitnehmer nach einem der Ansprüche 1 bis 4,
**dadurch gekennzeichnet,**
**daß** die ersten Befestigungsflächen (10, 10', 110, 110', 610, 610') sowie die zweiten Befestigungsflächen (15, 115, 115', 615, 615') Mittel zum Übertragen von Kräften in einer Ebene senkrecht zur Längsachse und Mittel zum Zentrieren der Lagerelemente (7, 7', 107, 107', 607, 607') aufweisen.

6. Flanschmitnehmer nach Anspruch 5,
**dadurch gekennzeichnet,**
**daß** die ersten Befestigungsflächen (10, 10', 610, 610') des Flanschelements (6, 606) jeweils eine radial zur Längsachse (11, 611) verlaufende Nut (12, 612, 612') aufweisen und
**daß** die zweiten Befestigungsflächen (15, 615, 615') der Lagerelemente (7, 7', 607, 607') jeweils eine gegengleiche Ausformung (16, 616, 616') aufweisen.

7. Flanschmitnehmer nach Anspruch 5,
**dadurch gekennzeichnet,**
**daß** die ersten Befestigungsflächen (110, 110') Verzahnungen aufweisen und
**daß** die zweiten Befestigungsflächen (115, 215, 315, 415, 515) zu den ersten Verzahnungen komplementäre Verzahnungen aufweisen.

8. Flanschmitnehmer nach Anspruch 7,
**dadurch gekennzeichnet,**
**daß** die Zähne der Verzahnungen (250, 350, 450) jeweils eine erste Flanke (251, 351, 451) aufweisen, die in einem steilen Winkel zu einer senkrecht zur Längsachse angeordneten Ebene verläuft, und jeweils eine zweite Flanke (252, 352, 452) aufweisen, die in einem flachen Winkel zur Ebene verläuft.

9. Flanschmitnehmer nach einem der Ansprüche 7 oder 8,
**dadurch gekennzeichnet,**
**daß** die Zähne (150, 250) der Verzahnung parallel zur Bohrungsachse (114, 214) verlaufen.

10. Flanschmitnehmer nach einem der Ansprüche 5 bis 9,
**dadurch gekennzeichnet,**
**daß** die ersten Befestigungsflächen (10, 10', 610, 610') Vorsprünge (13, 13', 656, 656') aufweisen, gegen die sich die Lagerelemente (7, 7', 607, 607') in radialer Richtung abstützen.

11. Flanschmitnehmer nach einem der Ansprüche 5 bis 10,
**dadurch gekennzeichnet,**
**daß** in den ersten Befestigungsflächen und in den zweiten Befestigungsflächen (115, 215) Feder-Nut-Verbindungen (149, 249) vorgesehen sind.

12. Flanschmitnehmer nach einem der Ansprüche 7 oder 8,
**dadurch gekennzeichnet,**
**daß** die Zähne (350, 450) der Verzahnung radial zu einem Mittelpunkt verlaufen, der in der Ebene liegt, die von der Längsachse und der Bohrungsachse (314, 414) aufgespannt ist.

13. Flanschmitnehmer nach einem der Ansprüche 7 oder 8,
**dadurch gekennzeichnet,**
**daß** die Zähne (550, 550') der Verzahnung in zwei Bereichen jeweils parallel zueinander verlaufen und
**daß** sich die Zähne (550) des einen Bereichs und die Zähne (550') des anderen Bereichs in ihrer Verlängerung in einem Winkel schneiden.

14. Flanschmitnehmer nach einem der Ansprüche 1 bis 13,
**dadurch gekennzeichnet,**
**daß** die Verbindungsfläche (21, 621) Zentriermittel zum Zentrieren des Flanschelements (6, 606) gegenüber einer Längsachse des Gegenflansches (30) aufweist.

15. Flanschmitnehmer nach Anspruch 14,
**dadurch gekennzeichnet,**
**daß** die Zentriermittel durch eine Hirth-Stirnverzahnung dargestellt sind.

16. Flanschmitnehmer nach einem der Ansprüche 1 bis 15,
**dadurch gekennzeichnet,**
**daß** das Flanschelement (6, 606) mittels Verbindungsschrauben (31) mit dem Gegenflansch verbindbar ist,
**daß** in dem Flanschelement (6, 606) Durchgangsbohrungen (26, 29, 626, 629) vorgesehen sind, durch die die Verbindungsschrauben (31) hindurch steckbar sind.

17. Flanschmitnehmer nach Anspruch 16,
**dadurch gekennzeichnet,**
**daß** die Durchgangsbohrungen (26, 29, 626, 629) für die Verbindungsschrauben (30) jeweils ausgehend von der Verbindungsfläche (21, 621) in eine zweite Spannfläche (25, 25', 28, 28', 625, 625'), die zur Anlage einer Muttern (36) oder eines Schraubenkopfes dient, münden.

18. Flanschmitnehmer nach Anspruch 17,
**dadurch gekennzeichnet,**
**daß** das Flanschelement (6) eine Außenumfangsfläche (23) aufweist, in der zwei zueinander um 180° versetzt angeordnete Taschen (24, 24') gebildet sind, die jeweils im Bereich zwischen zwei Durchgangsbohrungen ( 19, 20, 19', 20') für Befestigungsschrauben (22) eines Lagerelements (7, 7') angeordnet sind und die jeweils eine zweite Spannfläche (25, 25') bilden.

19. Flanschmitnehmer nach einem der Ansprüche 17 oder 18,
**dadurch gekennzeichnet,**
**daß** das Flanschelement (6) zwei Ausnehmungen (27, 27') aufweist, die sich jeweils über den Umfang zwischen zwei ersten Befestigungsflächen (10, 10') erstrecken und die jeweils eine zweite Spannfläche (28, 28') bilden.

20. Flanschmitnehmer nach einem der Ansprüche 1 bis 19,
**dadurch gekennzeichnet,**
**dass** das Flanschelement (6, 106, 606) nitriergehärtet ist,

21. Flanschmitnehmer nach einem der Ansprüche 1 bis 20,
**dadurch gekennzeichnet,**
**dass** die Lagerelemente (7, 7', 107, 107', 607, 607') einsatzgehärtet sind.

## Claims

1. A flange-type driving dog for universal joints, more particularly universal joints for transmitting high torque values,
having a flange element (6, 106, 606) which comprises
- a longitudinal axis (11, 11, 611),
- two first fixing faces (10, 10', 110, 110', 610, 610') which, at a first end face (8, 608) of the flange element (6, 106, 606), are arranged on a common circumference so as to be offset relative to one another around the longitudinal axis (11, 111, 610) by 180°,
- a connecting face (21, 121, 621) which is arranged at a second end face (9, 609) of the flange element (6, 106, 606),
by means of which the flange element (6, 106, 606) can be connected to a counter flange (39), and
having two bearing elements (7, 7', 107, 107', 607, 607') which each comprise
- a bearing bore (4, 5, 104, 204, 304, 404, 504, 604),
wherein the bearing bores (4,5, 104, 204, 304, 404, 504, 604) of the second bearing element (7, 7', 107, 107', 607, 607') are arranged coaxially relative to a common bore axis (14) and wherein the bore axis (14) intersects the longitudinal axis (11, 111, 611) at a right angle,
- a second fixing face (15, 115, 115', 615, 615') which is in contact with one of the first fixing faces (10, 10', 110, 110', 610, 610') of the flange elements (6, 106, 606),
**characterised in**
**that** the two bearing elements (7, 7', 107, 107', 607, 607') comprise at least two blind hole bores (17, 18, 117, 117', 118, 118', 217, 218, 317, 318, 417, 418, 517, 518) which extend parallel to the longitudinal axis (11, 111, 611) and comprise inner threads starting from the second fixing face (15, 115, 115' 116, 116'),
wherein each blind hole bore (17, 18, 117, 117', 118, 118', 217, 218. 317, 318, 417, 418, 517, 518) is associated with a through-bore (19, 20, 19', 20', 119, 120, 619, 620, 619', 620') in the flange element (6), which through-bores extend parallel to the longitudinal axis (11, 111, 611),
wherein the through-bores (19, 20, 19', 20', 119, 120, 619, 619', 620, 620') start from a first tensioning face (44, 144, 644) and end in one of the first fixing faces (10, 10', 110, 110', 610, 610') and
wherein fixing bolts (22, 122, 622) are inserted through the through-bores (19, 20, 19', 20', 119, 120, 619, 620, 619, 620), are each supported via a threaded nut (155, 655) or a screw head against the respective first tensioning face (44, 144, 644) and are positioned in the blind hole bores (17, 18, 117, 117' 118, 118', 217, 218, 217, 318, 417,418, 517, 518).

2. A flange-type driving dog according to claim 1,
**characterised in**
**that** the through-bores (19, 20, 19', 20') each start from the first tensioning face (44) and change into a bore (40, 41) with a greater diameter which ends in the connecting face (21).

3. A flange-type driving dog according to claim 1,
**characterised in**
**that** the flange element (106) comprises an outer circumferential face (154) in which there are provided recesses (153) which form the first tensioning faces (44).

4. A flange-type driving dog according to claim 1,
**characterised in**
**that** the flange element (606) comprises an outer circumferential face (654) in which there is provided a circumferential groove (653) which forms the first tensioning faces (644).

5. A flange-type driving dog according to any one of claims 1 to 4,
**characterised in**
**that** the first fixing faces (10, 10', 110, 110', 610, 610') as well as the second fixing faces (15, 115, 115', 615, 615') comprise means for transmitting forces in a plane extending perpendicularly to the longitudinal axis and means for centring the bearing elements (7, 7', 107, 107', 607, 607').

6. A flange-type driving dog according to claim 5,
**characterised in**
**that** the first fixing faces (10, 10', 610, 610') of the flange element (6, 606) each comprise a groove (12, 612, 612') extending radially relative to the longitudinal axis (11, 611) and
**that** the second fixing faces (15, 615, 615') of the bearing elements (7, 7', 607, 607') each comprise a corresponding formation (16, 616, 616').

7. A flange-type driving dog according to claim 5,
**characterised in**
**that** the first fixing faces (110, 110') comprise toothings and
**that** the second fixing faces (115, 215, 315, 415, 515) comprise toothings which are complementary to the first tooothings.

8. A flange-type driving dog according to claim 7,
**characterised in**
**that** the teeth of the toothings (250, 350, 450) each comprise a first flange (251, 351, 451) which extends at a steep angle relative to a plane extending perpendicularly relative to the longitudinal axis, as well as a second flank (252, 352, 452) which extends at a shallow angle relative to the plane.

9. A flange-type driving dog according to any one of claims 7 or 8,
**characterised in**
**that** the teeth (150, 250) of the toothing extend parallel to the bore axis (114, 214).

10. A flange-type driving dog according to any one of claims 5 to 9,
**characterised in**
**that** the first fixing faces (10, 10', 610, 610') comprise projections (13, 13', 656, 656') against which the bearing elements (7, 7', 607, 607') are supported radially.

11. A flange-type driving dog according to any one of claims 5 to 10,
**characterised in**
**that** in the first fixing faces and in the second fixing faces (115, 215) there are provided spring/groove connections (149, 249).

12. A flange-type driving dog according to any one of claims 7 or 8,
**characterised in**
**that** the teeth (350, 450) of the toothing extend radially towards a centre which is positioned in a plane which is formed by the longitudinal axis and the bore axis (314, 414).

13. A flange-type driving dog according to any one of claims 7 or 8,
**characterised in**
**that** the teeth (550, 550') of the toothing extend in two regions parallel relative to one another and
**that** the extensions of the teeth (550) of the one region and the extensions of the teeth (550') of the other region intersect one another at an angle.

14. A flange-type driving dog according to any one of claims 1 to 13,
**characterised in**
**that** the connecting face (21, 621) comprises centring means for centring the flange element (6, 606) relative to a longitudinal axis of the counter flange (30).

15. A flange-type driving dog according to claim 14,
**characterised in**
**that** the centring means are provided in the form of Hirth end toothings.

16. A flange-type driving dog according to any one of claims 1 to 15,
**characterised in**
**that** the flange element (6, 606) can be connected by connecting bolts (31) to the counter flange and
**that** in the flange element (6, 606) there are provided through-bores (26, 29, 626, 629) which can be penetrated by the connecting bolts (31).

17. A flange-type driving dog according to claim 16,
**characterised in**
**that** the through-bores (26, 29, 626, 629) for the connecting bolts (30) each start from the connecting face (21, 621) and end in a second tensioning face (25, 25', 28, 28', 625, 625') which serves to provide contact with a nut (36) or a bolt head.

18. A flange-type driving dog according to claim 17,
**characterised in**
**that** the flange element (6) comprises an outer circumferential face (23) in which there are formed two pockets (24, 24') which are offset relative to one another by 180° and which are each arranged in the region between two through-bores (19, 20, 19', 20') for fixing bolts (22) of a bearing element (7, 7') and which each form a second tensioning face (25, 25').

19. A flange-type driving dog according to any one of claims 17 or 18,
**characterised in**
**that** the flange element (6) comprises two recesses (27, 27') which each extend over the circumference between two first fixing faces (10, 10') and which each form a second tensioning face (28, 28').

20. A flange-type driving dog according to any one of claims 1 to 19,
**characterised in**
**that** the flange element (6, 106, 606) is nitride-hardened.

21. A flange-type driving dog according to any one of claims 1 to 201,
**characterised in**
**that** the bearing elements (7, 7', 107, 107', 607, 607') are case-hardened.

## Revendications

1. Entraîneur à bride pour des joints de Cardan, en particulier pour des joints de Cardan destinés à transmettre des couples de rotation élevés, comportant un élément formant bride (6, 106, 606) qui comprend
- un axe longitudinal (11, 111, 611),
- deux premières surfaces de fixation (10, 10', 110, 110', 610, 610') qui sont agencées sur une première face frontale (8, 608) de l'élément formant bride (6, 106, 606) à une périphérie commune autour de l'axe longitudinal (11, 111, 611) en étant décalées de 180° l'une par rapport à l'autre,
- une surface de liaison (21, 121, 621) qui est agencée sur une deuxième face frontale (9, 609) de l'élément formant bride (6, 106, 606) et au moyen de laquelle l'élément formant bride (6, 106, 606) peut être relié à une contre-bride (30), et
comportant deux éléments formant palier (7, 7', 107, 107', 607, 607') qui comprennent chacun
- un perçage de montage (4, 5, 104, 204, 304, 404, 504, 604), les perçages de montage (4, 5, 104, 204, 304, 404, 504, 604) des deux éléments formant palier (7, 7', 107, 107', 607, 607') étant ménagés coaxialement par rapport à un axe de perçage commun (14), et l'axe de perçage (14) recoupant à angle droit l'axe longitudinal (11, 111, 611),
- une deuxième surface de fixation (15, 115, 115', 615, 615') en appui avec l'une des premières surfaces de fixation (10, 10', 110, 110', 610, 610') de l'élément formant bride (6, 106, 606),
**caractérisé en ce que** les deux éléments formant palier (7, 7', 107, 107', 607, 607') présentent au moins deux perçages borgnes (17, 18, 117, 117', 118, 118', 217, 218, 317, 318, 417, 418, 517, 518) à taraudage qui s'étendent parallèlement à l'axe longitudinal (11, 111, 611) et qui partent de la deuxième surface de fixation (15, 115, 115', 116, 116'),
dans lequel
à chaque perçage borgne (17, 18, 117, 117', 118, 118', 217, 218, 317, 318, 417, 418, 517, 518) est associé un perçage traversant (19, 20, 19', 20', 119, 120, 619, 620, 619', 620') qui s'étend parallèlement à l'axe longitudinal (11, 111, 611) dans l'élément formant bride (6),
les perçages traversants (19, 20, 19', 20', 119, 120, 619, 620, 619', 620') partant chacun d'une première surface de serrage (44, 144, 644) débouchent dans l'une des premières surfaces de fixation (10, 10', 110, 110', 610, 610'), et
des vis de fixation (22, 122, 622) sont enfilées à travers les perçages traversants (19, 20, 19', 20', 119, 120, 619, 620, 619', 620'), prennent appui par un écrou (155, 655) ou par une tête de vis contre la première surface de serrage respective (44, 144, 644) et reposent dans les perçages borgnes (17, 18, 117, 117', 118, 118', 217, 218, 317, 318, 417, 418, 517, 518).

2. Entraîneur à bride selon la revendication 1, **caractérisé en ce que** les perçages traversants (19, 20, 19', 20') se transforment chacun, en partant de la première surface de serrage (44), en un perçage (40, 41) de diamètre plus grand qui se termine dans la surface de liaison (21).

3. Entraîneur à bride selon la revendication 1, **caractérisé en ce que** l'élément formant bride (106) comprend une surface périphérique extérieure (154) dans laquelle sont prévus des évidements (153) qui forment les premières surfaces de serrage (44).

4. Entraîneur à bride selon la revendication 1, **caractérisé en ce que** l'élément formant bride (606) comprend une surface périphérique extérieure (654) dans laquelle est prévue une gorge périphérique (653) qui forme les premières surfaces de serrage (644).

5. Entraîneur à bride selon l'une des revendications 1 à 4, **caractérisé en ce que** les premières surfaces de fixation (10, 10', 110, 110', 610, 610') ainsi que les deuxièmes surfaces de fixation (15, 115, 115', 615, 615') présentent des moyens pour transmettre des forces dans un plan perpendiculaire à l'axe longitudinal et des moyens pour centrer les éléments formant palier (7, 7', 107, 107', 607, 607').

6. Entraîneur à bride selon la revendication 5, **caractérisé en ce que** les premières surfaces de fixation (10, 10', 610, 610') de l'élément formant bride (6, 606) présentent chacune une gorge (12, 612, 612') qui s'étend radialement par rapport à l'axe longitudinal (11, 611), et **en ce que** les deuxièmes surfaces de fixation (15, 615, 615') des éléments formant palier (7, 7', 607, 607') présentent chacune une conformation (16, 616, 616') identique opposée.

7. Entraîneur à bride selon la revendication 5, **caractérisé en ce que** les premières surfaces de fixation (110, 110') présentent des dentures et **en ce que** les deuxièmes surfaces de fixation (115, 215, 315, 415, 515) présentent des dentures complémentaires aux premières dentures.

8. Entraîneur à bride selon la revendication 7, **caractérisé en ce que** les dents des dentures (250, 350, 450) présentent chacune un premier flanc (251, 351, 451) qui s'étend sous un angle raide par rapport à un plan agencé perpendiculairement à l'axe longitudinal, ainsi qu'un deuxième flanc (252, 352, 452) qui s'étend sous un angle plat par rapport audit plan.

9. Entraîneur à bride selon l'une ou l'autre des revendications 7 et 8,
**caractérisé en ce que** les dents (150, 250) de la denture s'étendent parallèlement à l'axe de perçage (114, 214).

10. Entraîneur à bride selon l'une des revendications 5 à 9, **caractérisé en ce que** les premières surfaces de fixation (10, 10', 610, 610') présentent des saillies (13, 13', 656, 656') contre lesquelles prennent appui les éléments formant palier (7, 7', 607, 607') en direction radiale.

11. Entraîneur à bride selon l'une des revendications 5 à 10, **caractérisé en ce que** dans les premières surfaces de fixation et dans les deuxièmes surfaces de fixation (115, 215) sont prévues des liaisons à languette et rainure (149, 249).

12. Entraîneur à bride selon l'une ou l'autre des revendications 7 et 8, **caractérisé en ce que** les dents (350, 450) de la denture s'étendent radialement par rapport à un centre qui se trouve dans le plan défini par l'axe longitudinal et par l'axe de perçage (314,414).

13. Entraîneur à bride selon l'une ou l'autre des revendications 7 et 8, **caractérisé en ce que** les dents (550, 550') de la denture dans deux zones s'étendent parallèlement les unes aux autres, et **en ce que** les dents (550) de l'une des zones et les dents (550') de l'autre zone se recoupent sous un angle dans leur prolongement.

14. Entraîneur à bride selon l'une des revendications 1 à 13, **caractérisé en ce que** la surface de liaison (21, 621) comprend des moyens de centrage pour centrer l'élément formant bride (6, 606) par rapport à un axe longitudinal de la contre-bride (30).

15. Entraîneur à bride selon la revendication 14, **caractérisé en ce que** les moyens de centrage sont représentés par une denture Hirth à dents de loup.

16. Entraîneur à bride selon l'une des revendications 1 à 15, **caractérisé en ce que** l'élément formant bride (6, 606) est susceptible d'être relié à la contre-bride au moyen de vis de liaison (31), et **en ce qu'**il est prévu des perçages traversants (26, 29, 626, 629) dans l'élément formant bride (6, 606), à travers lesquels peuvent être enfilées les vis de liaison (31).

17. Entraîneur à bride selon la revendication 16, **caractérisé en ce que** les perçages traversants (26, 29, 626, 629) pour les vis de liaison (30) débouchent chacun, en partant de la surface de liaison (21, 621), dans une deuxième surface de serrage (25, 25', 28, 28', 625, 625') qui sert à l'appui d'un écrou (36) ou d'une tête de vis.

18. Entraîneur à bride selon la revendication 17, **caractérisé en ce que** l'élément formant bride (6) présente une surface périphérique extérieure (23) dans laquelle sont formées deux poches (24, 24') décalées de 180° l'une par rapport à l'autre, qui sont ménagées chacune dans la zone entre deux perçages traversants (19, 20, 19', 20') pour des vis de fixation (22) d'un élément formant palier (7, 7') et qui forment chacune une deuxième surface de serrage (25, 25').

19. Entraîneur à bride selon l'une ou l'autre des revendications 17 et 18, **caractérisé en ce que** l'élément formant bride (6) présente deux évidements (27, 27') qui s'étendent chacun sur la périphérie entre deux premières surfaces de fixation (10, 10') et qui forment chacun une deuxième surface de serrage (28, 28').

20. Entraîneur à bride selon l'une des revendications 1 à 19, **caractérisé en ce que** l'élément formant bride (6, 106, 606) est durci par nitruration.

21. Entraîneur à bride selon l'une des revendications 1 à 20, **caractérisé en ce que** les éléments formant palier (7, 7', 107, 107', 607, 607') sont durcis par cémentation et trempe.
